# EUROPEAN PATENT APPLICATION

(11) **EP 3 470 948 A1**
(43) Date of publication of application: **17.04.2019**
(21) Application number: 18198343.8
(22) Date of filing: 02.10.2018
(51) Int. Cl.: G05D 1/02

(54) **AUTOMATED SECURITY PATROL VEHICLE**

(30) Priority: 12.10.2017 US 201715782210
(71) Applicant: Aptiv Technologies Limited, St. Michael (BB)
(72) Inventor: LAUR, Michael H, MISSION VIEJO, CALIFORNIA 92692 (US); HILNBRAND, Brian R, MOUNTAIN VIEW, CALIFORNIA 94043 (US); AGARWAL, Divya, SUNNYVALE, CALIFORNIA 94086 (US)
(74) Representative: Robert, Vincent

(57) **Abstract**

A security system (10) that uses an automated vehicle to patrol, for example, a neighborhood (14) includes a host-vehicle (12), a perception-sensor (18), and a controller (30). The host-vehicle (12) is operable to patrol a neighborhood (14) without an occupant in the host-vehicle (12). The perception-sensor (18) is mounted on the host-vehicle (12). The perception-sensor (18) is operable to detect a situation (16) in a neighborhood (14). The controller (30) is in communication with the perception-sensor (18). The controller (30) is configured to report when the situation (16) is a violation (46) of rules (32) of the neighborhood (14).

## Description

### TECHNICAL FIELD OF INVENTION

This disclosure generally relates to a security system that uses an automated host-vehicle to patrol an area without an occupant in the host-vehicle, and more particularly relates to a system that reports when a situation is a violation of rules.

### BACKGROUND OF INVENTION

Many neighborhoods (e.g. a gated community), businesses, and communities desire some form of security services such as patrolling security personnel. However, paying for the personnel to provide constant surveillance can be expensive.

### SUMMARY OF THE INVENTION

Described herein is a security system that uses one or more automated vehicles (e.g. a host-vehicle) to patrol some defined area (e.g. neighborhood, business parking-lot, entertainment facility) without having a human operator present in the host-vehicle. The host-vehicle is equipped with one or more appropriate sensors, e.g. cameras, radars, microphones that can be used to detect violations of rules or other problems. Using an automated host-vehicle is advantageous as the host-vehicle can work non-stop without distraction or taking breaks, and will not be prone to personal biases. By way of example and not limitation, the system may be configured to automatically alert homeowners of incidents and/or violations. The system generally makes use of the perception sensors on the host-vehicle to detect, for example, detect an open garage door, a fallen trash can, instances of cars improperly parked on the street, instances of unauthorized garage sales unauthorized activities after a certain hour/date, and/or the presence of unexpected moving vans. The system may also be used to escort someone in through a gated community, report instances of broken gates/control-arms, identify unauthorized vehicles, large amounts of flowing water, or detect excessive sound levels including gunshot detection, power outages, detect instances of traffic/intersection violations, dangerous animals such as bobcats and coyotes and mosquitos, mailbox tampering, package theft, fire and smoke and hazardous gas (such as CH4) detection, weather detection, school bus passing violations, housing standards and architectures, law violations, activity while on vacation, code violations, and/or detect excessive sound levels including gunshot detection.

In accordance with one embodiment, a security system that uses an automated vehicle to patrol a neighborhood is provided. The system includes a host-vehicle, a perception-sensor, and a controller. The host-vehicle is operable to patrol a neighborhood without an occupant in the host-vehicle. The perception-sensor is mounted on the host-vehicle. The perception-sensor is operable to detect a situation in a neighborhood. The controller is in communication with the perception-sensor. The controller is configured to report the situation

The controller may be configured to report when the situation is a safety hazard. The controller may be configured to report when the situation is a violation of rules of the neighborhood. The system may include a communication-device, and the controller is configured to request security-personnel when the situation is classified as a severe-violation. The rules may include a noise-threshold, the perception-sensor may be operable to determine a noise-source at a location in the neighborhood, and the controller may be configured to report when a noise-level of the noise-source is louder than the noise-threshold. The rules may designate a no-parking-zone, the perception-sensor may be operable to determine when another-vehicle is parked in the no-parking-zone, and the controller may be configured to report when the no-parking-zone is occupied. The rules may include an authorized-vehicle-list, the perception-sensor may be operable to determine an identity of another-vehicle, and the controller may be configured to report when the identity of the other-vehicle is not on the authorized-vehicle-list.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a diagram of a security system in accordance with one embodiment; and
Fig. 2 is a scenario encountered by the system of Fig. 1 in accordance with one embodiment.

### DETAILED DESCRIPTION

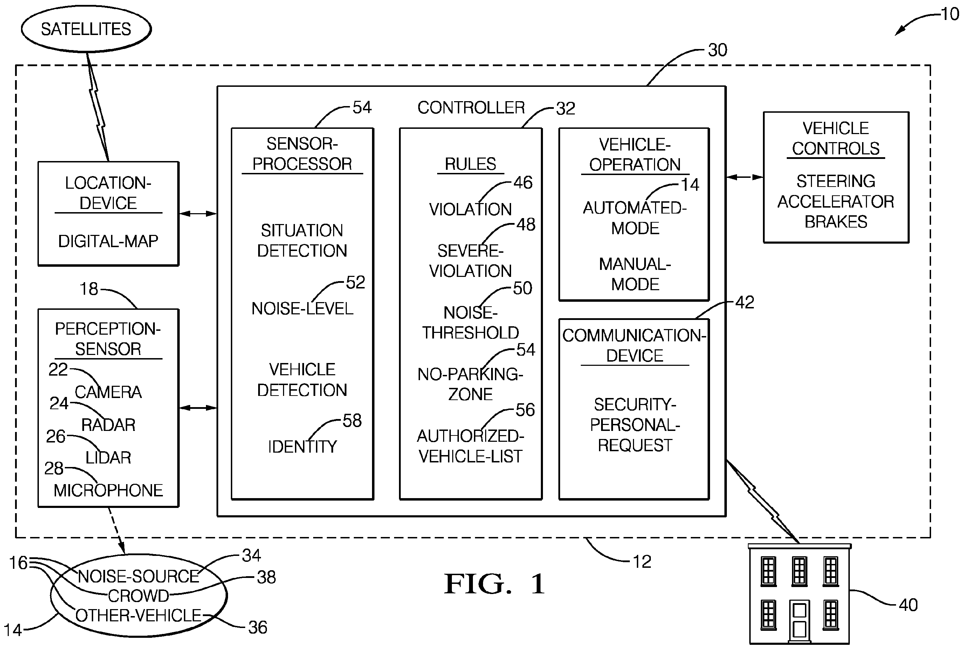

Fig. 1 illustrates a non-limiting example of a security system 10, hereafter referred to the system 10 that uses an automated vehicle, e.g. a host-vehicle 12, to patrol, for example, a neighborhood 14. As used herein, the term automated vehicle generally applies to instances when the host-vehicle 12 is being operated in an automated-mode, i.e. a fully autonomous mode, where an occupant or a human-operator (not shown) of the host-vehicle 12 is not present in the host-vehicle 12. However, full automation is not an absolute requirement. It is contemplated that the teachings presented herein are useful when the host-vehicle 12 is operated in a manual-mode where the degree or level of automation may be little more than providing an audible or visual indications of a detected instance of a situation 16 to the human-operator who is generally in control of the steering, accelerator, and brakes of the host-vehicle 12.

While the non-limiting examples presented herein are directed to the host-vehicle 12 being configured or operable to patrol the neighborhood 14, this is not meant to limit the patrolling capabilities to only instances of neighborhoods. Those in the automated vehicle arts will instantly recognize that the system 10 described herein is readily adapted to patrol other types of areas such as a shopping-mall parking lot, a place of employment parking lot, an entertainment venue, and the like, all without an occupant in the host-vehicle 12. The system 10 described herein is advantageous over human-based security systems that are largely reliant human security guards because the system 10 provides for patrol and security services without the expense of paying for a human security guard to occupy the host-vehicle 12.

The system 10 includes a perception-sensor 18 mounted on the host-vehicle 12. The perception-sensor 18 may include or be formed of, but is not limited to, a camera 22, a radar 24, a lidar 26, a microphone 28, or any combination thereof. As will become apparent in the description of the system 10 below, the perception-sensor 18 is generally configured or is operable to detect an instance of the situation 16 in the neighborhood 14. Those in the vehicle sensing arts will recognized that there are a wide variety of commercially available examples of devices suitable to form the perception-sensor 18.

The system 10 includes a controller 30 in communication with the perception-sensor 18. While the controller 30 is illustrated as being located in the host-vehicle 12, this is not a requirement. It is contemplated that all or part of the functions delegated to the controller 30 in the description that follows could be performed by an in-vehicle instance of the controller 30, or by all or part of the controller 30 being located remote from the host-vehicle 12, at a remote central office for example. The controller 30 may include a processor (not specifically shown) such as a microprocessor or other control circuitry such as analog and/or digital control circuitry including an application specific integrated circuit (ASIC) for processing data as should be evident to those in the art. The controller 30 may include memory (not specifically shown), including non-volatile memory, such as electrically erasable programmable read-only memory (EEPROM) for storing one or more routines, thresholds, and captured data. The one or more routines may be executed by the processor to perform steps for determining that an instance of the situation 16 has been detected based on signals received by the controller 30 from the perception-sensor 18 as described herein.

In order to provide security services using the host-vehicle 12 to detect instances of the situation 16 while operating the host-vehicle 12 in an automated-mode, i.e. without an operator present in the host-vehicle 12, the controller 30 is advantageously configured to report when an instance of the situation 16 detected by the perception-sensor 18 is a violation of rules 32 of the neighborhood 14. By way of example and not limitation, the situation 16 may be based on a noise-source 34 such as a loud-speaker or a noisy instance of an other-vehicle 36, or a crowd 38, details of which will be discussed in more detail below. The report of an instance of the situation 16 may be communicated to a central-office 40 by using a communication-device 42 such as a wireless transceiver used to access a cellular-telephone network, a radio-frequency (RF) transceiver, or a Wi-Fi network.

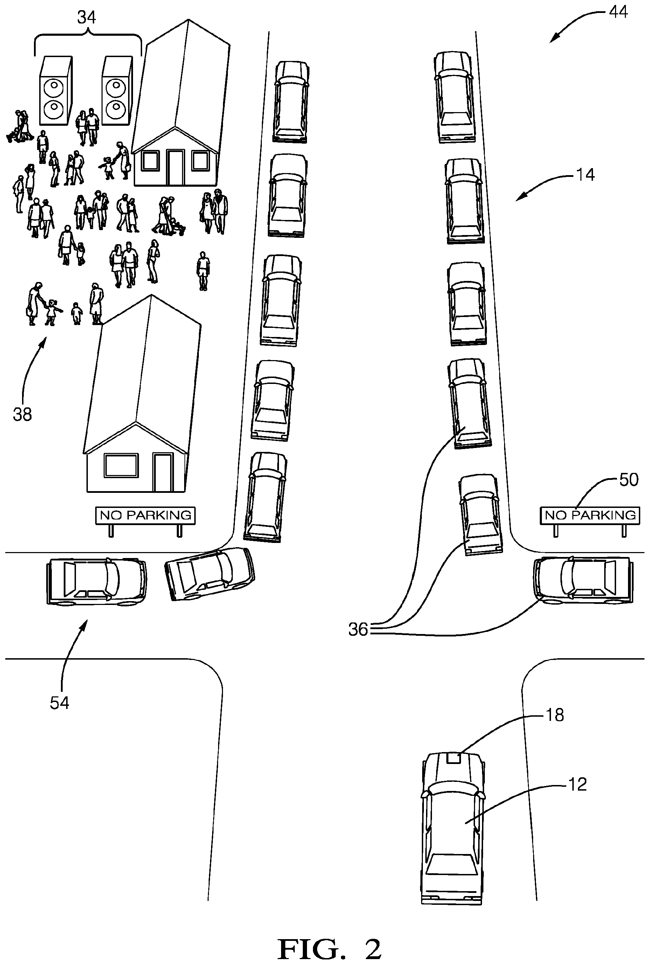

Fig. 2 illustrates a non-limiting example of a scenario 44 where the host-vehicle 12 is patrolling the neighborhood 14 searching for instances of violations of the rules 32 and/or situations where assistance may be necessary to protect the safety and well-being of persons and property in the neighborhood 14. Some instances of the situation 16 may be classified as a violation 46 of the rules 32, i.e. the situation 16 may be considered a relatively minor infraction. If the violation 46 is detected, the response may be a direct notification to a property owner where the violation 46 occurred. For example, there may be a rule against having a trash-can (not shown) out at the roadside more than twenty-four hours prior to or twenty-four hours after a trash pickup is scheduled. The system 10 may respond to the violation 46 of this rule by sending a text or e-mail message to the owner or resident at the address where the violation 46 is occurring. That is, the system 10 may be configured to respond to the violation 46 without any action on the part of some human, e.g. a person working at the central-office 40.

However, an instance of the situation 16 may be classified as a severe-violation 48 (Fig. 1), and the system 10 or the controller 30 may be configured to request security-personnel (not shown, i.e. a human security guard or law enforcement official) when the situation 16 is classified as a severe-violation 48. For example, if the severe-violation 48 is the result of a crowd 38 of people, i.e. a riot or unauthorized demonstration, the situation 16 may not be sufficiently dealt with by merely sending a text or e-mail to the resident or property owner where the severe-violation 48 has occurred. That is, the sever-violation 48 may require an appearance of law-enforcement to correct the situation 16.

By way of further example, the rules 32 may include a noise-threshold 50, and the microphone 28 of the perception-sensor 18 may be usable or operable to detect or determine the noise-source 34 at a location in the neighborhood 14. The controller 30 may be configured to report when a noise-level 52 of the noise-source 34 is louder than the noise-threshold 50. If the noise-source 34 is located at some distance from the host-vehicle, fifty-meters for example, the camera 22, the radar 24, and/or the lidar 26 may be used to determine a distance to the noise-source 34, and detect obstructions (e.g. buildings) that may account for attenuation of the noise-level 52. That is, from a distance the system 10 may be able to estimate the noise-level 52 close to the noise-source 34, and thereby better determine if an instance of the violation 46 of the rules 32 is occurring.

As another non-limiting example, the rules 32 may designate a no-parking-zone 54. The combination of devices that form the perception-sensor 18 may be operable to determine when an instance of the other-vehicle 36 is parked in the no-parking-zone 54. The system 10 or the controller 30 may be configured to use the camera 22 or other means, e.g. direct-short-range-communications (DSRC), to determine ownership or who is responsible for parking an instance of the other-vehicle 36 in the no-parking-zone 54. The system 10 may be configured to immediately issue a warning or parking-ticket electronically to the owner. Alternatively, the system 10 or the controller 30 may be configured to report to the central-office 40 when the no-parking-zone 54 is occupied, and the central-office 40 may be the entity that determines if a parking ticket is issued, and to whom. For example, an image of a license plate may be rendered by the camera 22 so the identity 58 of the owner can be determined.

As another non-limiting example, the rules 32 may include an authorized-vehicle-list 56 of instances of the other-vehicles that are authorized to be in the neighborhood 14. As above, the perception-sensor 18 (e.g. the camera 22) may be operable to determine the identity 58 of the other-vehicle 36, i.e. the identity 58 of the owner of the other-vehicle 36. To prevent unauthorized access to the neighborhood 14 (or an employee parking lot if the system is applied to a place of employment), the controller 30 is configured to report when the identity 58 of the other-vehicle 36 is not on the authorized-vehicle-list 56. If the other-vehicle 36 is not authorized, i.e. is not listed on the authorized-vehicle-list 56, the system 10 may order a tow-truck, or contact the central-office 40 to determine if a tow-truck is necessary.

Accordingly, a security system (the system 10), a controller 30 for the system 10, and a method of operating the system 10 are provided. The system 10 makes use of the perception-sensor 18, which is normally on the host-vehicle 12 to allow for automated or autonomous operation of the host-vehicle 12, to provide a means to detect instances of objects (e.g. the crowd 38 or the other-vehicle 36) that do not conform with the rules 32 of the neighborhood 14.

While this invention has been described in terms of the preferred embodiments thereof, it is not intended to be so limited, but rather only to the extent set forth in the claims that follow.

## Claims

1. A security system (10) that uses an automated vehicle to patrol a neighborhood (14), said system (10) comprising:
a host-vehicle (12) operable to patrol a neighborhood (14) without an occupant in the host-vehicle (12);
a perception-sensor (18) mounted on the host-vehicle (12), wherein the perception-sensor (18) is operable to detect a situation (16) in a neighborhood (14);
a controller (30) in communication with the perception-sensor (18), wherein the controller (30) is configured to report the situation (16).

2. The system (10) in accordance with claim 1, wherein the controller (30) is configured to report when the situation (16) is a safety hazard.

3. The system (10) in accordance with claim 1, wherein the controller (30) is configured to report when the situation (16) is a violation (46) of rules (32) of the neighborhood (14).

4. The system (10) in accordance with claim 3, wherein the system (10) includes a communication-device (42), and the controller (30) is configured to request security-personnel when the situation (16) is classified as a severe-violation (48).

5. The system (10) in accordance with claim 3, wherein the rules (32) include a noise-threshold (50), the perception-sensor (18) is operable to determine a noise-source (34) at a location in the neighborhood (14), and the controller (30) is configured to report when a noise-level (52) of the noise-source (34) is louder than the noise-threshold (50).

6. The system (10) in accordance with claim 3, wherein the rules (32) designate a no-parking-zone (54), the perception-sensor (18) is operable to determine when an other-vehicle (36) is parked in the no-parking-zone (54), and the controller (30) is configured to report when the no-parking-zone (54) is occupied.

7. The system (10) in accordance with claim 3, wherein the rules (32) include an authorized-vehicle-list (56), the perception-sensor (18) is operable to determine an identity (58) of an other-vehicle (36), and the controller (30) is configured to report when the identity (58) of the other-vehicle (36) is not on the authorized-vehicle-list (56).
